Europäisches Patentamt

European Patent Office

Office européen des brevets

(11) Publication number: **0 066 625**
**B1**

(12) **EUROPEAN PATENT SPECIFICATION**

(45) Date of publication of patent specification: **23.11.89**

(51) Int. Cl.⁴: **H 04 N 1/04, H 04 N 1/23**

(21) Application number: **81903011.5**

(22) Date of filing: **10.11.81**

(86) International application number:
**PCT/JP81/00324**

(87) International publication number:
**WO 82/02135 24.06.82 Gazette 82/16**

(54) **THERMAL PRINTING COPY MACHINE.**

(30) Priority: **10.12.80 JP 174069/80**
**10.12.80 JP 174070/80**
**10.12.80 JP 174072/80**
**10.12.80 JP 174073/80**
**10.12.80 JP 174075/80**
**10.12.80 JP 174076/80**

(43) Date of publication of application:
**15.12.82 Bulletin 82/50**

(45) Publication of the grant of the patent:
**23.11.89 Bulletin 89/47**

(84) Designated Contracting States:
**DE FR GB**

(56) References cited:
**EP-A-0 037 225**
**JP-A-5 413 730**
**JP-A-5 448 246**
**JP-A-50 125 614**
**JP-A-54 160 111**
**JP-A-55 009 574**
**JP-A-55 118 266**
**JP-U-5 097 326**
**US-A-3 502 814**

(73) Proprietor: **FUJI XEROX CO., LTD.**
**No. 3-5, Akasaka 3-chome**
**Minato-ku Tokyo 107 (JP)**

(72) Inventor: **KURATA, Masami**
**Ebina Works Fuji Xerox Company Limited,**
**Hongo 2274**
**Ebina-shi Kanagawa 243-04 (JP)**
Inventor: **MORIGUCHI, Fujio**
**Ebina Works Fuji Xerox Company Limited,**
**Hongo 2274**
**Ebina-shi Kanagawa 243-04 (JP)**
Inventor: **INUI, Toshiharu**
**Ebina Works Fuji Xerox Company Limited,**
**Hongo 2274**
**Ebina-shi Kanagawa 243-04 (JP)**
Inventor: **MURAYAMA, Tomio**
**Ebina Works Fuji Xerox Company Limited,**
**Hongo 2274**
**Ebina-shi Kanagawa 243-04 (JP)**
Inventor: **OMORI, Takashi**
**Ebina Works Fuji Xerox Company Limited,**
**Hongo 2274**
**Ebina-shi Kanagawa 243-04 (JP)**
Inventor: **KIKUCHI, Yoshiki**
**Ebina Works Fuji Xerox Company Limited,**
**Hongo 2274**
**Ebina-shi Kanagawa 243-04 (JP)**

Courier Press, Leamington Spa, England.

## EP 0 066 625 B1

⑤⑧ References cited:
**PATENTS ABSTRACTS OF JAPAN, vol. 4, no. 21, 21st February 1980, page 76E172, & JP - A - 54 160 111 (NIPPON DENSHIN DENWA KOSHA)(18-12-1979).**

⑦② Inventor: **NAKAJIMA, Hisao**
**Ebina Works Fuji Xerox Company Limited,**
**Hongo 2274**
**Ebina-shi Kanagawa 243-04 (JP)**
Inventor: **MORIGUCHI, Haruhiko**
**Ebina Works Fuji Xerox Company Limited,**
**Hongo 2274**
**Ebina-shi Kanagawa 243-04 (JP)**

⑦④ Representative: **Lehn, Werner, Dipl.-Ing. et al**
**Hoffmann, Eitle & Partner Patentanwälte**
**Arabellastrasse 4**
**D-8000 München 81 (DE)**

## Description

**Technical field**

The present invention relates to a copying machine, and more particularly to a copying machine for producing a number of copies from one original, including a platen for arranging an original thereon, a read unit for reading the image information of the original during relative movement of the platen and read unit and for converting the read image into electrical picture signals. Such a scanning/reading device is known from DE—A—2508115. The known scanning/reading device is used in a facsimile transmitter.

**Background art**

Copying machines are classified into those using diazo photography, others using xerography, and so on. In the diazo photography, however, only one copy is obtained from one original so that operations have to be carried out for a desired number of copies in order to attain multiple copies, and there is also a restriction that the original has to be transparent or semitransparent. In xerography, on the contrary, a number of copies can be produced from one original, and there is no restriction upon the original. Nevertheless, xerography has disadvantages that a lot of power is required for fixing the developed image onto a sheet, the heat of the fixer has to be shielded, and that the size of the system as a whole is enlarged because of a need of photosensitive elements such as a drum or belt.

**Disclosure of the invention**

It is an objection of the present invention to provide a small-sized multi-sheet copying machine which has a low power consumption rate and which has a simple construction.

In order to attain this object, the present invention provides a thermal recording type copying machine of the type according to the first paragraph, in which a thermal recording head is provided having heating elements for generating heat in accordance with said electrical picture signals converted by said read unit;

conveying means are provided for conveying an ink donor member and a recording paper sheet in juxtaposition to each other, while being in close contact under pressure, past said heating elements of said thermal recording head; and

means are provided for discharging the recorded paper to thereby obtain a copying machine simple in structure, reduced in size and with less electrical power consumption. According to this copying machine, the original information, which is placed upon the platen, is read out line by line and is converted into series picture image signals by the action of the image sensor, and those picture image signals are subjected to a suitable picture image processing and are fed to the thermal recording head so that the leading end portion of the thermal recording head generates heat in accordance with those picture image signals. By this heat, the donor web, which is sandwiched between the thermal recording head and the recording paper sheet, is heated so that a pigment is melted out of said donor web until it sticks to the recording paper sheet. The ink donor material for such a copy comprises a web-shaped configuration which is fed from a feed roll. Thus, the original information is copied line by line on the recording paper sheet.

In the above-mentioned processes of the present invention, that is, (1) process for making the platen and read unit movable back and forth relative to each other, (2) process for conveying the recording paper sheet, and (3) process for discharging the recorded paper, the following various methods are also applicable.

With respect first to (1) the process for making the platen and read unit movable back and forth relative to each other, there may be provided:

(1-a) a method in which the platen for arranging the original thereon is fixed, while the read unit for reading the picture image information of the original and for converting it into the electrical picture signals is made movable back and forth relative to the platen.

(1-b) a method in which the read unit for reading the picture image information of the original and for converting it into the electrical picture signals is fixed, while the platen for arranging the original thereon is made movable back and forth relative to the read unit.

With respect to (2) process for conveying the recorded paper sheet, there may be provided:

(2-a) a method in which the recording paper sheets are arranged in a stacked form in a cassette datachably arranged and fed by an automatic feed roller which contacts with the uppermost sheet of the stack of the recording paper sheet.

(2-b) a method in which the recording paper in a web-shaped form wound on a recording paper supply roll is supplied by an idler.

With respect to (3) process for discharging the recorded paper, there may be provided:

(3-a) a method in which the recording paper sheet and the donor web are conveyed in juxtaposition to each other, and after the picture image formation is done on the recording paper sheet by the thermal recording head, the recorded paper is then discharged and the donor web is taken up upon a take-up roller.

(3-b) a method in which the recording paper sheet and the donor web are conveyed in juxtaposition to each other, and after the picture image formation is done on the recording paper sheet by the thermal recording head, the recorded paper sheet and the donor web are discharged under the state where they are in close contact under pressure.

Thus, since the processes (1), (2) and (3) mentioned above can be combined, various embodiments may be applicable to the present invention.

Furthermore, by being designed such that the electrical image signals from the image sensor can also be transmitted externally and also such that external image signals can be received and reproduced, the copying machine according to the present invention can be used as a facsimile transmitter and receiver, and can also be used in conjunction with an external signal processor to perform image synthesis, image elimination, image enhancement, etc.. It is also preferred to provide a white line skip function, a circuit for generating pseudo half-tone regeneration signals, and an image enlarging and diminishing function.

The thermal recording head comprises a plurality of heat generation resistor elements and, by controlling them while dividing them into blocks, the capacity of the power source can be decreased. Particularly, in a case where black information of the image signals for one line exceeds a predetermined ratio, the power source drain can be minimized by increasing the number of blocks and decreasing the number of elements in one block. Further, the copying machine according to the present invention can read the images not only in the forward stroke but also in the backward stroke of the platen, during which backward stroke the machine is adapted to rearrange the image signals.

It is also preferred to detect the width and the length of the origninal to control the transmission amount and the moving distance of the platen for one line of the image signals.

Brief description of the drawings

Fig. 1 is a schematic side view showing the thermal recording copying machine according to one embodiment of the present invention;

Fig. 2 is a schematic view showing the operation panel of the copying machine of Fig. 1;

Fig. 3 is a block diagram showing the circuit of the copying machine of Fig. 1;

Figs. 4, 5 and 6 are schematic side views showing the thermal recording copying machine according to another embodiment of the present invention; and

Fig. 7 is a block diagram of the circuit of the copying machine of Figs. 5 and 6.

Best mode for carrying out the invention

The present invention will now be described in more detail with reference to the accompanying drawings.

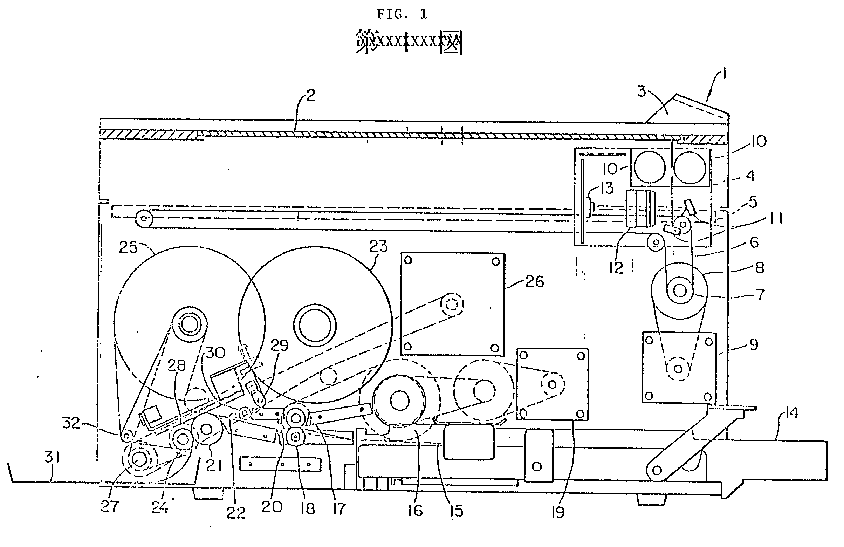

In Fig. 1, reference numeral 1 generally indicates an example of a copying machine, into which the features of the present invention are incorporated. At an upper portion of the copying machine 1, there is arranged a platen 2. This platen 2 is made of transparent glass or the like and is adapted to arrange an original thereon. The platen 2 is covered with a platen cover 3 so that it is prevented from being blotted with dust or the like and is protected from scratches and other damage. The platen 1 and platen cover 2 are hinged to the frame of the copying machine. Below the platen 2, there is arranged a read unit 4 which is attached to a read unit guide rail 5 such that it can move back and forth. These movements of the read unit 4 are effected through a drive belt 6, which is made to run on a drive shaft 7. To this drive shaft 7, there is fixed a drive roller 7, and the drive roller 8 is driven through a belt or the like by a step motor 9. When the step motor 9 is energized, the drive roller 8 and accordingly the drive shaft 7 are rotated so that these rotational motions are transmitted as linear motions through the drive belt 6 to the read unit 4. As a result, the read unit 4 stepwise moves to the right and left below the platen 2 along the rail 5.

The read unit 4 is composed of a pair of light sources 10, a pair of reflecting mirrors 11, a lens 12 and an image sensor 13. The light sources 10 are made to extend the width of the platen at right angles with respect to the moving direction of the read unit. The beams generated by the light sources 10 pass through slits which are formed at an upper portion of the read unit 4, and are reflected from the original; which is arranged on the platen, in accordance with the image information thereof so that they are converted into an optical image. This optical image has its optical path changed by the mirrors 11 so that it enters the lens 12, and the lens 12 focusses the incident optical image upon the image sensor 13. The image sensor 13 is constructed of, for example, three juxtaposed arrays of 1024 photodiodes to thereby read out the information of one line having a width of 256 mm (i.e., the width of B4 paper) with a resolution of 12 dots/mm. On the other hand, the image sensor 13 may use another type of photoelectric converting element such as CCD.

The picture image information of the original is fed consecutively line by line to the image sensor 13 until it is fed out as a continuous picture image electrical signal. This continuous picture image electrical signal is fed to a thermal recording head through a suitable picture signal-processing circuit or the like, as will be described hereinafter.

At the lower righthand corner of the copying machine 1, there is detachably arranged a recording paper supply cassette 14, in which sheets of recording paper 15 are arranged in a stacked form. A feed roller 16 contacts with the uppermost sheet of the stack of the sheets of recording paper so that it consecutively feeds out the recording paper sheets 15 one by one. The recording paper sheets 15 are fed by the automatic feed roller 16 into the nip between a registering roller 17 and a pitch roller 18 facing the former. The automatic feed roller 16 is driven through means such as a belt by a feeding step motor 19. This driving power transmission system is similar to that of the step motor for driving the aforementioned read unit.

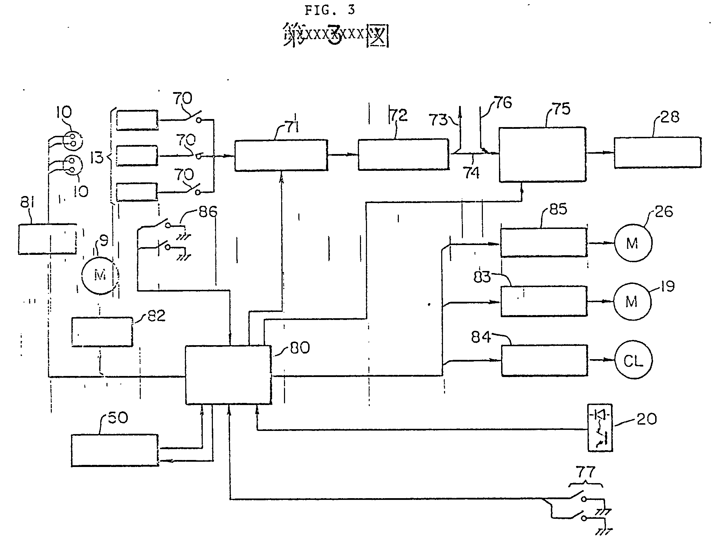

On the other hand, the aforementioned registering roller 17 acts to make the recording paper sheet 15 stand by at a suitable position. When the recording paper sheet 15 passes through the nip between the registering roller 17 and the pitch roller 18 and further through a registration sensor 20, the automatic feed roller 16 is disengaged from the feeding step motor 19 by the action of an electromagnetic clutch (CL in Fig. 3). As a result, the subsequent conveyance of the recording paper sheet 15 is performed by the registering roller 17. After the recording paper sheet 15 has passed, a sequence control circuit (as will be described hereinafter) counts the number of pulses corresponding to the stepwise operations of the feeding step motor 19 and deenergizes the step motor at the time when the recording paper sheet 15 reaches a back roller 21, to interrupt the rotational motions of the registering roller and thereby hold the recording paper sheet 15 at that position. After that, that recording paper sheet 15 is conveyed together with an ink donor web 22 along the back roller 21.

The ink donor web 22 is prepared by applying a melting pigment to one side thereof which is to be brought into contact with the recording paper sheet 15. The donor web 22 thus prepared is supplied from a donor web supply roll 23 and passes along the circumference of the back roller 21 and around a donor web feed roller 24 until it extends to a donor web take-up roller 25. The take-up operation of that ink donor web is performed by an ink donor web step motor 26. More specifically, the drive force of the step motor 26 is transmitted through suitable means such as a belt to an idler 27. Since this idler 27 is coupled to the donor web feed roller 24 which is in contact with the back roller 21, the back roller 21 is stepwise driven. The step motor 26 operates at first immediately before the recording paper sheet 15 reaches the back roller 21 so that the ink donor web 22 and the recording paper sheet 15 may be conveyed together by the action of the back roller 21. This is intended to avoid wasteful consumption of the ink donor web.

On the opposite side of the ink donor web 22 from the side facing the back roller, a thermal recording head 28 is so arranged that it holds the ink donor web between the head 28 and the back roller. The thermal recording head 28 is formed into such a slender shape that a number of heating elements are juxtaposed in a direction to intersect the moving direction of the donor web to thereby thermally record the recording paper sheet 15 with the information of one line, which has been read out by the image sensor 13. Since the simultaneous energization of those heating elements reqires a power source having a large capacity, the heating elements are grouped into a predetermined number of blocks, and the elements are energized on a block-by-block basis so as to reduce the size of the power source. By way of example, the heating elements of 1728 dots are grouped into four blocks each having 432 dots at an interval of 6 to 8 dots/mm, so that the blocks are consecutively energized one by one to thereby effect the image formtion. This control of energization is easily performed by means of a diode matrix or the like.

In the energization of the heating elements of the thermal recording head, moreover, the energization width (the number of elements in the width direction is controlled in accordance with the width of the recording paper used to thereby eliminate waste in the power consumption and to prevent the detrimental transfer of ink to the back roller 21. Moreover, the ratio of the black information in one line to be recorded is calculated, and, in case it exceeds a predetermined ratio (e.g., 25%), the aforementioned number of the blocks into which the elements are divided is increased (e.g., from four to eight or sixteen blocks) to thereby control the energization of the heating elements. Thus, the power source of the thermal recording head need not have its capacity increased even in the case of a high percentage of black information.

In the moving passage of the ink donor web 22, there are arranged both an automatic balancing roller 29 for smoothing the ink donor web and an idler 30 for holding constant the feed angle of the recording paper sheet. The idler 30 may preferably be arranged at a position for the web to make such an angle that the recording paper sheet 15 is smoothly fed to the back roller 21. The recording paper sheet 15 is separated down-stream of the roller 24, after having been thermally recorded, so that it is fed out into a discharge tray 31, in which it is stacked. On the other hand, the ink donor web is taken up through an idler 32 upon the take-up roller 25. This take-up roller 25 is equipped with a slip clutch, which is driven by the idler 27 to thereby slide and drive the take-up roll 25.

The replacement of the supply roll 23 and the take-up roll 25 can be simply performed by rocking the idling portion (not shown), which is attached in a rockable manner to the frame of the copying machine, so that the platen 2 is swung upward together with the platen cover 3 to thereby allow an easy access.

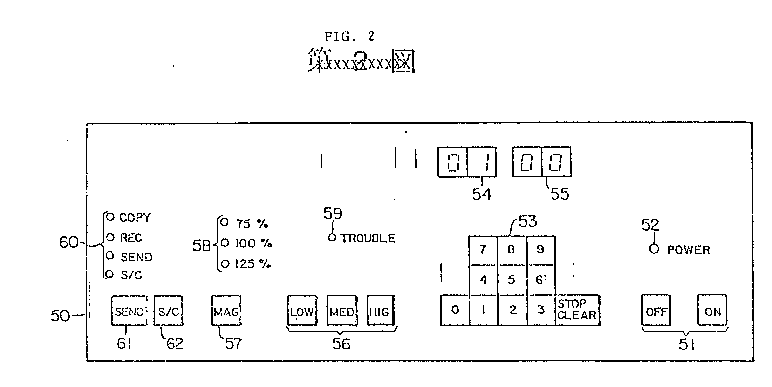

Fig. 2 shows an operation panel 50 of the copying machine according to the present invention. A switch 51 is a power source switch, in which a lamp 52 is lighted up when the power source is put to ON. A numerical button 53 is a setter for setting number of copies and the number set to the setter is displayed on a display 54. Upon changing the number, a STOP CLEAR button is pushed to set a new number. Another display 55 indicates the number of reproduced copies. A button 56 is switched for selecting copy density and for starting, in which reproduction is started while selecting the copy density at low density (LOW), medium density (MED) or high density (HIG) by pushing any of the buttons. A button 57 is selector for magnification ratio, and the selected magnification ratio is displayed on a display 58 located just above. For instance, upon one push of the button 57 in a state where 75% magnification ratio is displayed, the magnification ratio changed to 100%, then another push of the button 57 changes to 125% and, by further push, returns to 75%. A display 59 flickers in a case where troubles such as paper clogging should occur in the inside of the reproducing machine. The display 59 is extinguished by the push of STOP CLEAR button after repair of abnormal troubles. A display 60 indicates the mode in the reproduction, in which only the copy lamp is usually lighted up to indicate the usual reproducing procedure. Upon receiving external request signal, only the REC lamp is lighted up whereby external image signals are received and formed as images on the recording paper sheet. Upon push of a button 61, the SEND lamp is lighted up to send image signals read by the image sensor 13 externally (reproduction is inhibited in this state). Upon push of a button 62, a lamp s/c is lighted up to conduct reproduction while sending read image signals externally.

Fig. 3 shows a circuit diagram for the copying machine according to the present invention. The circuit may be provided within the copying machine or may be provided separately as another casing in order to decrease the size of the machine. Reference numeral 13 is the image sensor shown in Fig. 1. In this circuit diagram, the photo-receiving elements are indicated divided into three blocks and switches 70 for successively switching the three blocks are provided. Serial image signals read by the image sensor 13 are inputted into an image signal processing circuit 71. The image signal processing circuit converts the signals into black and white binarized signals after the background compensation to eliminate noises (background) in the image signals. The image signal processing circuit is also provided with a white line skip function that skips the reading for a line in a case where the line is entirely white. For realizing the white line skip function, it is preferred to provide, in the image sensor 13, image receiving elements capable of reading at least two lines simultaneously. Further, the image signal processing circuit 71 is also provided with a generation circuit for pseudo intermediate tone signal that selects a plurality of different threshold levels in the stage of binarizing the image signals and thereby generating black dot signals, whereby regeneration of half-tone is enabled.

The output from the image signal processing circuit 71 is inputted into a linear density conversion circuit 72 which has a function of converting the image signals read by the image sensor 13 at 12 dot/mm in accordance with the selected magnification ratio. For instance, it converts 12 dots into 8 dots at 100% magnification ratio (1:1), 12 dots into 6 dots at the magnification ratio 75% (3/4 reduction) and 12 dots into 10 dots at the magnification ratio 125% (5/4 enlargement) and outputs serial binarized image signals.

According to the present invention which is, although, a copying machine, since the output from the linear density conversion circuit 72 takes the form of signal output suitable to the output form for the facsimile transmitter or the like, that is, binarized serial image signal output, the signals can be transmitted to external receivers. Line 73 is a communication line for external transmission. The line, for example, is a telephone line, local communication line, or connection lines of wireless, image synthesis, or elimination device.

In addition to the line 73, the output from the linear density conversion circuit 72 is directly connected by way of a line 74 also to an image signal regeneration circuit 75. Switching between the lines 73 and 74 is selected by the mode in the reproducing machine, wherein no output is issued to the line 73 when the COPY lamp is lighted up in the display 60, no output is issued to the line 74 upon push of the button 61 to light up the SEND lamp and outputs are issued simultaneously to the lines 73 and 74 upon push of button 62 to light up the s/c lamp.

The image signal regeneration circuit 75 comprises, as in the facsimile receiver, an image signal regeneration circuit having a sync signal generation circuit. Accordingly, image signals from an external line 76 can also be received. Switching between the lines 74 and 76 can be selected by the mode in the reproducing machine as in the selection for the lines 73 and 74. For example, the line 74 is selected when the COPY lamp is lighted up, only the line 76 is selected when the REC lamp is lighted up, both of the lines are disconnected when the SEND lamp is lighted up, and only the line 76 is selected when the s/c lamp is lighted up.

The image signal regeneration circuit 75 conducts the operation for relocating the image signal data corresponding to the scanning direction of the platen. As foregoings, while the read unit 4 is reciprocatable, image signals can be read not only in the forwarding stroke but also in the backwarding stroke in this invention. Therefore, since the reading order is inverted in the backwarding stroke relative to the forwarding stroke, it is necessary to relocate the data although it is only for one line. The signal regeneration circuit has such a function. The function is of course characteristic only to the backwarding scanning stage and it is not necessary in the forwarding scanning, or receiving the data from the external line 76.

The image signal regeneration circuit 75 is also provided with a serial to parallel conversion circuit for converting serial image signals into parallel signals, whereby data for one line or one block therein are prepared. A switch 77 for detecting the size of the recording paper sheet (for example, A4 or B4) is provided near the cassette 14, and a circuit for controlling the recording width of the thermal recording head 28 with the detected signal is also provided. The circuit 75 further contains the foregoing diode matrix for the block control of the heat generation members on the head 28 and also a block control circuit for increasing or decreasing the foregoing block number. Accordingly, the output from the image signal regeneration circuit selectively energize the heat generation resistor members on the thermal recording head 28 to heat the ink donor web 22 and form images on the recording paper sheet 15.

A circuit 80 is a sequence control circuit which controls, in a sequential manner, a power source 81 for lighting up the optical source 10 for the image reading unit, a driving circuit 82 for energizing the step motor 9 for driving a read unit, a driving circuit 83 for energizing the step motor 19 that advances the recording paper sheet, a driving circuit 84 for energizing the electromagneitc clutch CL that connects and disconnects the feed roller 16 and the step motor 19, a driving circuit 85 for energizing the step motor 26 that drives the feed roller 24 and the back roller 21 by way of the idler roller, and displays on the panel 50 respectively, and it also controls the timing of the image signals in the image signal circuit 71. The sequence control circuit 80 conducts the reproducing operation while receiving the instruction from the control panel 50, the signals from the recording paper size detection switch 77, registration sensor 20 for the recording paper sheet and the switch 86 that detects whether the platen 4 is at its home position or not. The sequence control will be made clearer by the following explanation for the operation of the copying machine.

The operation of the copying machine according to the present invention is as below. It is assumed here that the COPY lamp in the display 60 is lighted up on the panel 50. Upon pushing any of the buttons 56, the sequence control circuit 80, after confirming that the reproducing machine operates normally, energizes the power source 81 to light up the optical source 10, energizes the driving circuit 82 to drive the step motor 9 and set the read unit 4 to its home position. The switch 86 detects that the read unit 4 is at the home position and sends the detection signal to the sequence control circuit 80. If no signals arrive within a predetermined of period, the reproducing machine stops and lights up the display 59 to indicate the troubles.

The sequence control circuit 80 energizes the driving circuit 83 to advance the step motor 19 till the cassette 14 feeds the recording paper sheet 15, sends out one sheet from the feed roller 16 and continues to feed it till the sheet arrives at the registration roller 17 and the registration sensor 20. When the registration sensor 20 detects the recording paper sheet, the electromagnetic clutch CL is actuated to drive the registration roller 16, which in turn, sends the recording paper sheet. When the registration sensor 20 detects the recording paper sheet, the sequence control circuit 80 counts the number of pulses from the step motor 19, and stops the recording paper sheet when it arrives at the back roller 21.

Then, the step motor 9 is actuated to forward the read unit 4 and scan the original stepwise by the distance corresponding to the length of the original, and the image sensor 13 in the image reading unit 4 reads the original line by line. The images from the image sensor 13 are sent by way of the circuits 71, 72, 75 to the thermal recording head 28. The step motor 26 is actuated during or before the above operation to registrate the recording paper sheet with a predetermined blank to the thermal recording head 28 by the back roller 21 while contacting the recording paper sheet and the ink donor web 22 closely to thereby complete the setting for the recording. Information on every one line is recorded on the recording paper sheet by the image signal sent to the thermal recording head 28. The feed amount of the back roller 21 is different depending on the magnification ratio in the reproduction and the ratio is set as 75%:100%; 125%=3:4:5.

The recorded sheet is issued to the discharge tray 31 and the ink donor web is taken-up on the take-up roll 25. In a case of one copy reproduction, the read unit 4 is rapidly returned to the home position after the completion of the reproduction. In a case of multiple copy reproduction, reproducing procedures are conducted also in the backwarding stroke. In the latter case, since the moving direction of the recording paper sheet in the backwarding stroke is the same as in the forwarding stroke while the direction for reading the data read by the image sensor 13 is inverted, the data signals would be recorded as mirror images if the data read in the image sensor are outputted as they are to the thermal recording head. In view of the above, the one line data relocation circuit is operated in the image signal regeneration circuit 75 to compensate such disadvantage and record the positive images to the sheet.

Although the foregoing operation has been described with regard to the COPY mode, it will be obvious for other modes of operation from the above explanation. For instance, no image reading is conducted but only the recording operation is conducted in the REC mode, no recording operation is conducted but only the image reading is conducted, on the contrary, in the SEND mode, and the reproducing operation is conducted and image signals are transmitted as well by way of the line 73 in the s/c (SEND/COPY) mode.

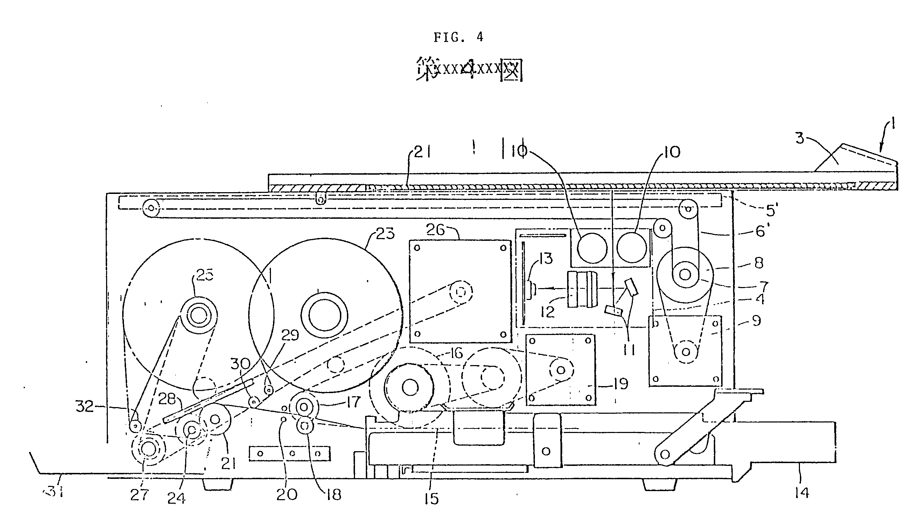

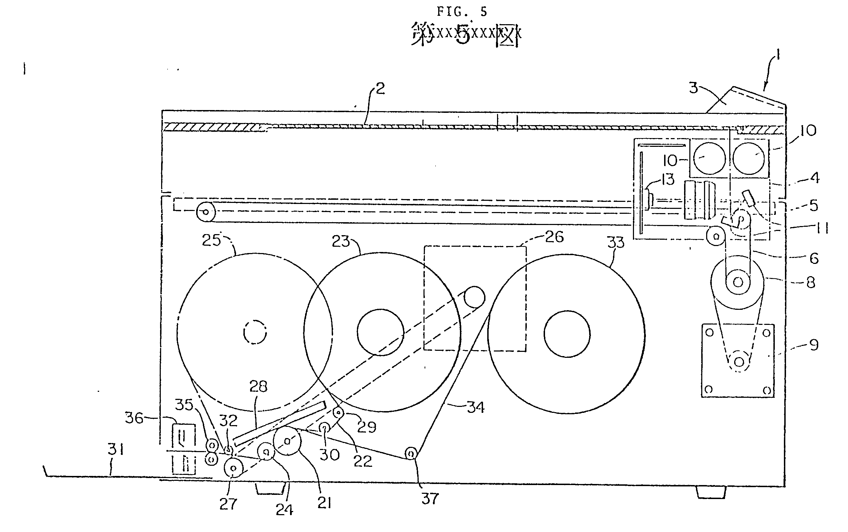

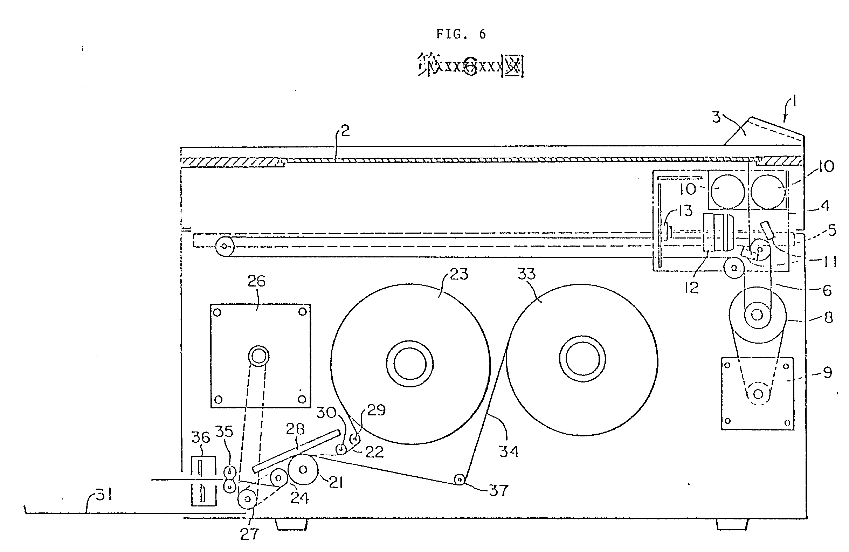

Fig. 4 shows a schematic side view of the embodiment of the thermal recording copying machine that as indicated in (1-b) of DISCLOSURE OF THE INVENTION, the read unit 4 is fixed, while the platen 2 for arranging the original thereon is made movable back and forth. The platen 2 carrying the original has the cover 3 thereon and is disposed reciprocatably on rails 5' provided on both sides of the upper portion of the copying machine. The step motor 9 and a driving belt 6' are provided for reciprocating the platen 2, and the platen 2 is moved driven by the step motor 9. As shown in this drawing, a driving roller 8 may be interposed between the step motor 9 and the driving belt 6'. The read unit 4 is fixed. The platen 2 is moved back and forth relative to the read unit 4 to thereby convert the picture image of the original into the electrical picture signals by the image sensor 13. The subsequent mechanism in this embodiment is the same as that of Fig. 1. The reciprocating mechanism of the platen of this embodiment is also applicable to the embodiments of Figs. 5 and 6 set forth below.

Fig. 5 shows the embodiment as indicated in (2-b) and (3-a) of the DISCLOSURE OF THE INVENTION. The relative reciprocating movement of the read unit 4 and platen 2 is the same as in Fig. 1. In this embodiment, there is provided a recording paper supply roll 33 so that web-shaped recording paper 34 is conveyed through an idler 37 into the nip between a thermal recording head 28 and a back roller. The web-shaped recording paper 34 thus conveyed is further conveyed together with an ink donor web 22 along the back roller 21. Then, the web-shaped recording paper 34 and the ink donor web 22 pass through a feed roller 24, while being pressed into close contact with each other by the back roller, unitl they are fed to the discharge roller 35. The web-shaped recording paper 34 and ink donor 22 are separated immediately before they reach the discharge roller 35 so that the ink donor web 22 is taken up on the take-up roll through an idler 32 whereas the web-shaped recording paper 34 is conveyed through the discharge roller 35 to the auto-cutter 36.

Fig. 6 shows the embodiment as indicated in (3-b) of the DISCLOSURE OF THE INVENTION which is the case where the recorded paper sheet and donor web are discharged without separating from each other. In this embodiment, the web-shaped recording paper 34 and the ink donor web 22 are conveyed together by the feed roller 24 to the discharge roller 35 even after the thermal recording operation. The discharge roller 35 makes the contacting ink donor web and web-shaped recording paper pass through the auto-cutter 36 until their leading ends fed out by a predetermined length to a discharge tray 31. After that, the auto-cutter 36 operates to cut the contacting ink donor web and web-shaped recording paper and allows them to drop into the discharge tray 31.

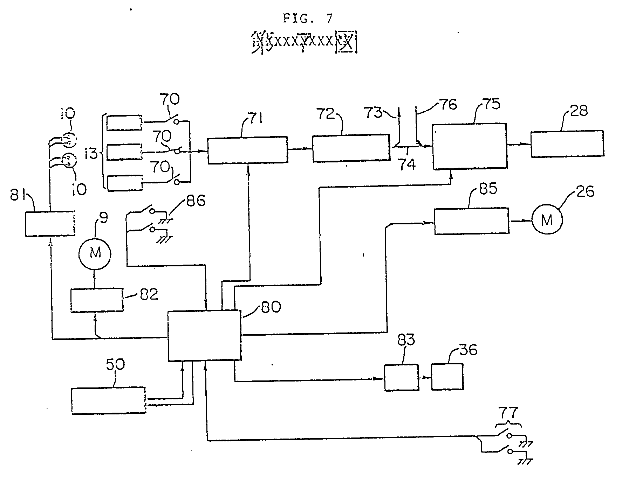

Fig. 7 shows a block diagram of the thermal recording copying machine shown in Figs. 5 and 6. The main difference between this figure and Fig. 3 is in that since the web-shaped recording paper is used in the embodiment of Figs. 5 and 6, there is provided the driving circuit 83 for operating the auto-cutter 36 in place of the driving circuit 83 for energizing the step motor 19 that advances the recording paper sheet arranged in a stacked form, and in place of the driving circuit 84 for energizing the electromagnetic clutch CL that connects and disconnects the feed roller 16 and the step motor 19, as shown in Fig. 1.

Industrial applicability

According to the present invention, there is provided a copying machine which makes it possible to copy a number of sheets although its power consumption rate is low and its construction is simple. Moreover, the copying machine can perform not only the copying operations but also the communication with an external device so that the composition, deletion, transfer and the like of a picture image can be performed.

**Claims**

1. A copying machine (1), including:
a platen (2) for arranging an original thereon;

a read unit (4) for reading the image information of the original during relative movement of said platen (2) and read unit (4) and for converting the read image into electrical picture signals; characterized by

a thermal recording head (28) having heating elements for generating heat in accordance with said electrical picture signals converted by said read unit (4);

conveying means (17, 18, 30, 21, 24, 27) for conveying an ink donor member (22) and a recording paper sheet (15) in juxtaposition to each other, while being in close contact under pressure, past said heating elements of said thermal recording head (28); and

means (21, 24) for discharging the recorded paper (15).

2. A copying machine as set forth in claim 1, wherein said platen (2) is fixed and said read unit (4) is movable back and forth relative to said platen (2).

3. A copying machine as set forth in claim 1, wherein said read unit (4) is fixed and said platen (2) is movable back and forth relative to said read unit (4).

4. A copying machine as set forth in claim 1, wherein said recording paper sheet (15) comprises a stack-formed sheet.

5. A copying machine as set forth in claim 1, wherein said recording paper sheet (15) comprises a web-shaped sheet.

6. A copying machine as set forth in claim 1, wherein said recorded paper (15) is separated from said ink donor member (22) and then discharged.

7. A copying machine as set forth in claim 1, wherein said recorded paper (15) and ink donor member (22) are discharged under the state where they are in close contact to each other.

**Patentansprüche**

1. Kopiermaschine (1) mit
einer Auflageplatte (2) zum Anordnen einer vorlage hierauf;

einer Leseeinheit (4) zum Lesen der Bildinformation der Vorlage während einer relativen Bewegung der Auflageplatte (2) und der Leseeinheit (4) und zum Umwandeln des gelesenen Bildes in elektrische Bildsignale; gekennzeichnet durch

einen thermischen Aufnahmekopf (28) mit Heizelementen zum Erzeugen von Wärme entsprechend den durch die Leseeinheit (4) umgewandelten elektrischen Bildsignalen;

Fördermittel (17, 18, 30, 21, 24, 27) zum Fördern eines Farbabgabeglieds (22) und eines Aufhahmepapierblatts (15) in eine Position einander gegenüber, während sie in engem Kontakt unter Druck stehen, an den Heizelementen des thermischen Aufnahmekopfes (28) vorbei; und

Mittel (21, 24) zum Ausstoßen des Aufnahmepapiers (15).

2. Kopiermaschine nach Anspruch 1, dadurch gekennzeichnet, daß die Auflageplatte (2) stationär ist und die Leseeinheit (4) relativ zu der Auflageplatte hin- und herbewegbar ist.

3. Kopiermaschine nach Anspruch 1, dadurch gekennzeichnet, daß die Leseeinheit (4) stationär ist und die Auflageplatte (2) relativ zu der Leseeinehit (4) hin- und herbewegbar ist.

4. Kopiermaschine nach Anspruch 1, dadurch gekennzeichnet, daß das Aufnahmepapierblatt (15) ein in einem Stapel ausgebildetes Blatt umfaßt.

5. Kopiermaschine nach Anspruch 1, dadurch gekennzeichnet, daß das Aufnahmepapierblatt (15) ein bahnförmiges Blatt umfaßt.

6. Kopiermaschine nach Anspruch 1, dadurch gekennzeichnet, daß das Aufnahmepapier (15) von dem Farbabgabeglied (22) getrennt und dann ausgestoßen wird.

7. Kopiermaschine nach Anspruch 1, dadurch gekennzeichnet, daß das Aufnahmepapier (15) und das Farbabgabeglied (22) in dem Zustand augestoßen werden, worin sie in engem Kontakt zueinander stehen.

**Revendications**

1. Une machine de copie (1), comprenant:
un plateau (2) destiné à recevoir un original;
une unité de lecture (4) destinée à lire l'information d'image de l'original pendant un mouvement relatif du plateau (2) et de l'unité de lecture (4), et à convertir l'image lue en signaux d'image électriques; caractérisée par:
une tête d'enregistrement thermique (28) qui comporte des éléments chauffants destinés à produire de la chaleur conformément aux signaux d'image électriques qui sont convertis par l'unité de lecture (4);

des moyens de transport (17, 18, 30, 21, 24, 27) qui sont destinés à transporter un élément d'encrage (22) et une feuille de papier d'enregistrement (15), en juxtaposition mutuelle et en contact intime sous pression, de façon à les faire passer devant les éléments chauffants de la tête d'enregistrement thermique (28); et
des moyens (21, 24) destinés à évacuer le papier enregistré (15),

2. Une machine de copie selon la revendication 1, dans laquelle le plateau (2) est fixe et l'unité de lecture (4) est mobile de façon à pouvoir accomplir un mouvement alternatif par rapport au plateau (2).

3. Une machine de copie selon la revendication 1, dans laquelle l'unité de lecture (4) est fixe et le plateau (2) est mobile de façon à pouvoir accomplir un mouvement alternatif par rapport à l'unité mobile (4).

4. Une machine de copie selon la revendication 1, dans laquelle la feuille de papier d'enregistrement (15) consiste en une feuille incorporée dans une pile.

5. Une machine de copie selon la revendication 1, caractérisée en ce que la feuille de papier d'enregistrement (15) se présente sous la forme d'une feuille continue.

6. Une machine de copie selon la revendication 1, caractérisée en ce que le papier enregistré (15) est séparé de l'élément encreur (22), après quoi il est évacué.

7. Une machine de copie selon la revendication 1, caractérisée en ce que le papier enregistré (15) et l'élément encreur (22) sont évacués dans l'étant dans lequel ils sont en contact mutuel intime.

FIG. 1

第xxxixxx図

FIG. 2

第xxx2xxx図

O COPY
O REC
O SEND
O S/C
60
50

O 75 %
O 100 %
O 125 %
58

59
O TROUBLE

53

7 8 9
4 5 6
0 1 2 3 STOP CLEAR

54 55

52
O POWER

SEND | S/C | MAG
61 62 57

LOW MED HIG
56

OFF ON
51

EP 0 066 625 B1

EP 0 066 625 B1

FIG. 3
第 XXX 3 XXX 図

3

FIG. 4

FIG. 5

FIG. 6

第xxx6xxx図

EP 0 066 625 B1

FIG. 7